# EUROPEAN PATENT APPLICATION

(11) **EP 4 472 184 A1**
(43) Date of publication of application: **04.12.2024**
(21) Application number: 24174428.3
(22) Date of filing: 07.05.2024
(51) Int. Cl.: H04M 1/72409

(54) **CONTROL UNIT**

(30) Priority: 30.05.2023 DK PA202330050
(71) Applicant: FalCom A/S, 2750 Ballerup (DK)
(72) Inventor: Verner, Thorbjørn Gade, 2750 Ballerup (DK); Niemann, Anders Juhl, 2750 Ballerup (DK)
(74) Representative: GN Store Nord A/S

(57) **Abstract**

A control unit (1) to be connected to a at least one other device (20, 21) of a communication system (27), which communication system (2) is adapted to be worn by a person. The control unit (1) is adapted to be removably secured in a securing position between a strap segment (14) and a loadbearing panel (15). The control unit (1) comprises a user interface (11) for controlling the at least one other device (20, 21), an elongate main body (2), which extends in a first direction (X) between a first end (3) and a second end (4) and has a front side (28) facing the strap segment (14) in the secured position and a rear side (29) facing the load-bearing panel (15) in the secured position. The front side (28) has a first recess (8) to receive the strap segment (14) in the secured position of the control unit (1).

## Description

### FIELD OF THE INVENTION

The invention relates in general to communication solutions for special operations, military, law enforcement and security personnel who all depend on optimal perception in extreme environments. The present invention relates more specifically to a control unit for a body worn communication system.

### BACKGROUND OF THE INVENTION

In combat and/or emergency situations, it may be desirable for a user to protect his/her hearing while enabling the user to communicate with others via radio communication. Therefore, soldiers Military and Law Enforcement Special Operations units wear communication systems, which should be reliable and easy to use.

WO19222648 A1 discloses a body worn communication system comprising a radio, a headset and a control unit connected to the headset and the radio. The control unit is a so-called PTT (push-to-talk) device, which is removably coupled to a strap extending across a user's chest, so it is quickly accessible by at least one hand. The strap can be a part of a grid of webbing.

A Pouch Attachment Ladder System (PALS) is a grid of webbing used to attach smaller equipment onto load-bearing platforms, such as vests and/or backpacks. The PALS may be used to attach items such as holsters, magazine pouches, radio pouches, knife sheathes, and other gear. A wide variety of pouches are commercially available, allowing users to customize their kit. PALS consists of a webbing sewn onto a load-bearing equipment and corresponding webbing and straps on the attachment. The straps are interwoven between the webbing on each of two pieces and finally snapped into place, making for a very secure fit which can be detached with moderate effort. New types are laser cut out of single piece fabric rather than webbing straps sewn onto fabric. Typically, Modular Lightweight Load-carrying Equipment (MOLLE) clips are used to attach the equipment to the PALS webbing.

The PALS grid consists of horizontal rows of 25 mm webbing, spaced 25 mm apart, and reattached to the backing at 38 mm intervals. Although the specification is for the stitches to be spaced 38 mm apart, stitching in the range 35-40 mm is considered acceptable in practice. Newer styles come in various laser cut fabric. The benefits often quoted for laser cut single piece style is significant weight saving especially on plate carriers/rigs and items with large amount of ladder area as well as less bulk. Another consideration is fabrics can be made in new popular patterns without need to source webbing in compatible shades including viewing conditions under night vision devices.

A PTT (Push-To-Talk) unit Model U94 /MS from the company TEA Headsets is a unit to be inserted between a communication unit and a headset and is provided with an alligator clip for attaching it to the PALS webbing. A disadvantage with this unit is, that it under certain circumstances can be detached from the PALS webbing, especially if the user is crawling or lying on with the chest on the ground.

### SUMMARY

This specification describes a control unit to be connected to a at least one other device of a communication system, which communication system is adapted to be worn by a person, the control unit is adapted to be removably secured in a secured position between a strap segment and a loadbearing panel, which control unit comprises: a user interface for controlling the at least one other device, an elongate main body, which extends in a first direction between a first end and a second end and has a front side facing the strap segment in the secured position and a rear side facing the load-bearing panel in the secured position, and wherein the front side has a first recess to receive the strap segment in the secured position of the control unit. Such a control unit can be secured very efficiently and stay in place under conditions, where it is exposed to external forces, f. ex. when the user is lying on his/her stomach.

According to an embodiment, the first recess has a first end and a second end.

According to an embodiment, the control unit comprises a button protrusion extending from the front side to a free end.

According to an embodiment, the first recess is arranged between the first end of the elongate body and the button protrusion.

According to an embodiment, an activation button is arranged at the free end.

According to an embodiment, a projection extends from the front side of the elongate body.

According to an embodiment, the first projection is arranged at first end of first recess and the button protrusion is arranged at the second end of the first recess.

According to an embodiment, the control unit comprises a locking member, which is extending from the first end and is adapted to be attached to the control unit at the second end.

According to an embodiment, the locking member is a loop shaped elastic cord. In this way, the control unit can be secured even more in the secured position.

According to an embodiment, a second recess is provided between the front side of the elongate body and the button protrusion at the second end of the elongate body.

According to an embodiment, the length of the first recess in the first direction is approximately 20-30 mm, 22-28 mm, or 24-26 mm.

According to an embodiment, a first cross section of the elongate member orthogonal to the first direction at the first recess is rounded with a maximum width of about 23 mm and a maximum thickness of about 15 mm.

According to an embodiment, a first cable and a second cable extend from the second end of the elongate body.

According to an embodiment, the control unit is a push-to-talk device.

### BRIEF DESCRIPTION OF THE FIGURES

Fig. 1 discloses a user worn communication system,
Fig. 2 discloses a control unit according to the invention removably attached to a plate carrier,
Fig. 3 discloses a side view of a control unit according to the invention,
Fig. 4 discloses a perspective view of a control unit according to the invention,
Fig. 5 discloses a perspective view of the control unit removably attached to a strap.

### DETAILED DESCRIPTION OF THE INVENTION

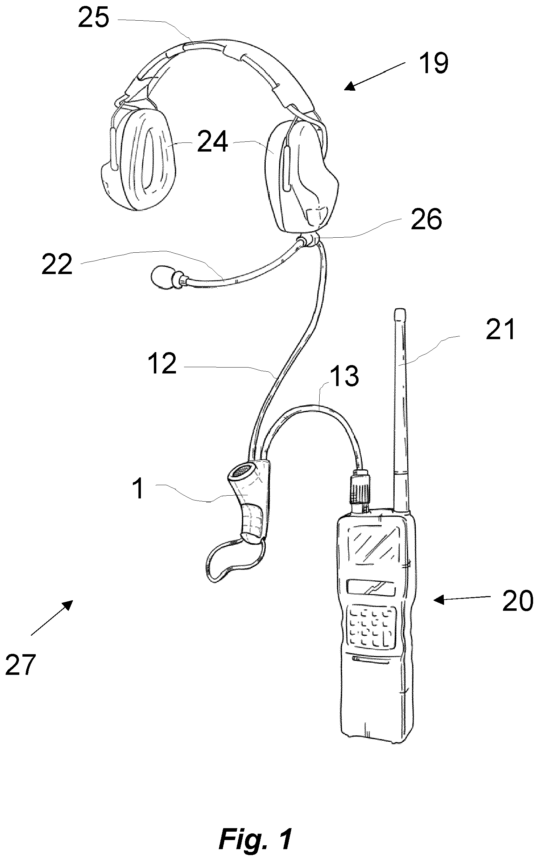

Figure 1 discloses a user worn communication system. The communication system 27 comprises a radio unit 20, a headset 19 and a control unit 1. At first cable 12 connects the control unit 1 to the headset 9 and a second cable 13 connects the control unit 1 to the radio unit 20. The headset 19 comprises two earphones 24 and a headband 25 connecting these. A microphone arm 22 extends from one of the earphones 24 at a headset connector 26. The radio unit 20 comprises an antenna 21 for wireless communication. During use the headset 19 is worn by the user's head and the control unit 1 and the radio unit 20 are worn on the body.

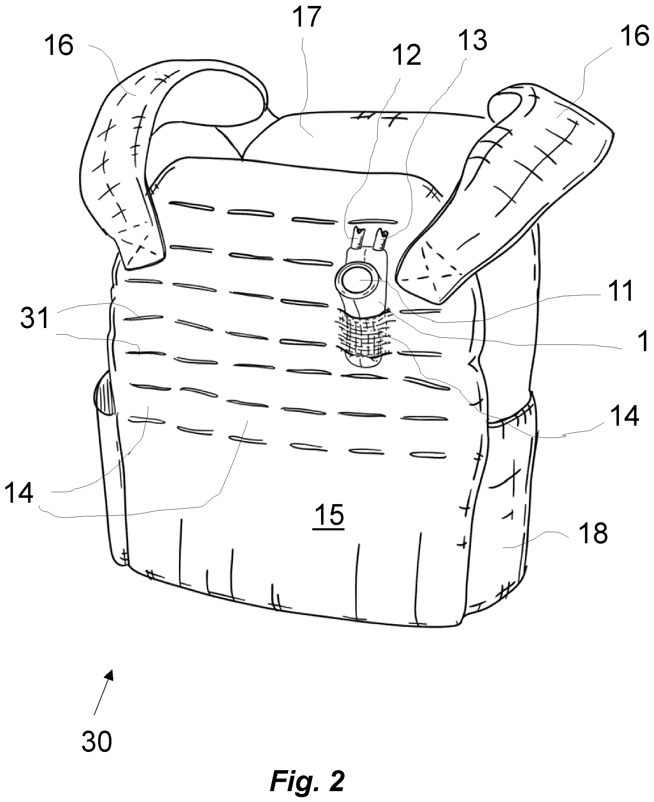

Figure 2 shows a plate carrier 30 which is a kind of vest which can hold protecting armor plates, tactical gear, and communication equipment. The plate carrier 30 comprises a front panel 15, a back panel 17, two side panels 18 and two shoulder straps 16. The front panel 15 comprises a PALS webbing with several strap segments 14. This PALS webbing is provided by laser cut fabric whereby strap segments 14 between line shaped cut-outs 31 are created. According to the standard the length of the cut-outs 31 are approximately 35-40 mm and the vertical distance between the cut-outs 31 are approximately 25 mm. In other versions of PALS webbing the strap segments 14 are provided by straps with a width of 25 mm, arranged in parallel with a 25 mm distance from each other and stitched to the panel with intervals of approximately 38 mm. A control unit 1 is removably secured to the plate carrier 30 by being pushed under a strap segment 14. The control unit 1 is a so-called PTT (push-to-talk) device 1 and comprises a push button 11, which in the secured position of the PTT device 1 is easy to access by the user wearing the plate carrier 30, even with gloves. The PTT device 1 is prevented from being moved in its longitudinal direction as a strap segment 14 is received in a recess, which will be further described in the following.

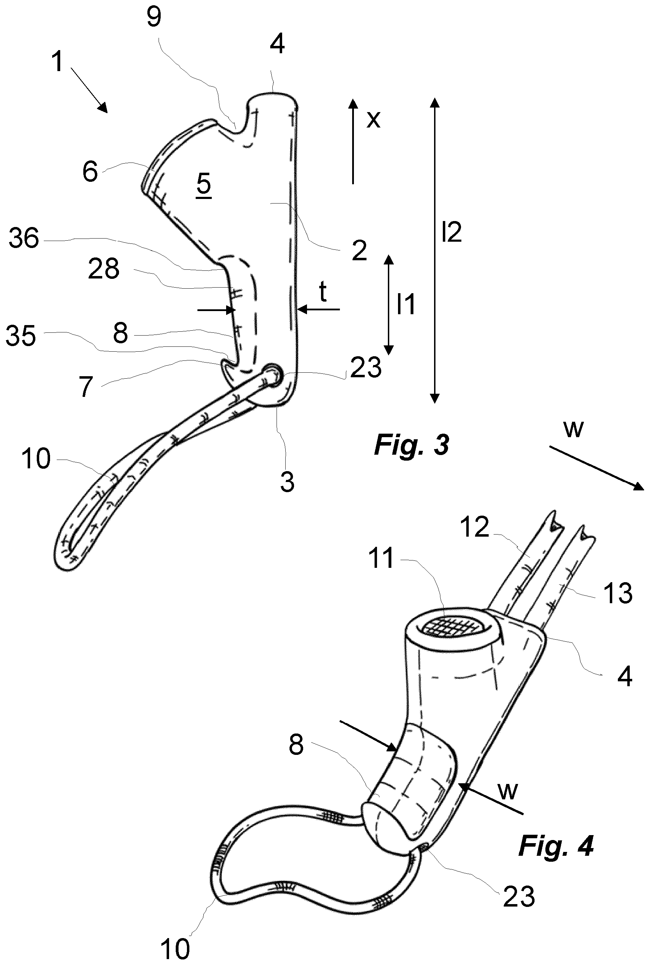

Figures 3 and 4 disclose the PPT device 1 from two directions. The PTT device 1 comprises an elongate main body 2 extending in a first direction x between a first end 3 and a second end 4. The PTT device 1 has a front side 28 facing the strap segment 14 in the secured position and a rear side 29 facing the load-bearing panel 15 in the secured position. The front side 28 has a first recess 8 to receive the strap segment 14 in the secured position of the PTT device 1. A projection 7 protrudes from the front side 28 at the first end 3 of the elongate body 2. A button protrusion 5 extends obliquely from the front side 28 towards a free end 6 with a push button 11. The first recess 8 extends from the projection 7 to the protrusion 5 and has a length I1 of approximately 25 mm in the first direction x. This length corresponds to the distance between two cut-outs 31. A loop shaped elastic cord 10 runs through a through-going hole 23 at the first end 3. The loop shaped elastic cord 10 can be stretched and fixed in a second recess 9 defined by the button protrusion 5 and the elongate body 2 at the second end 4. A part of the first cable 12 and a part of the second cable 13 extends from the second end 4 as shown in fig. 4.

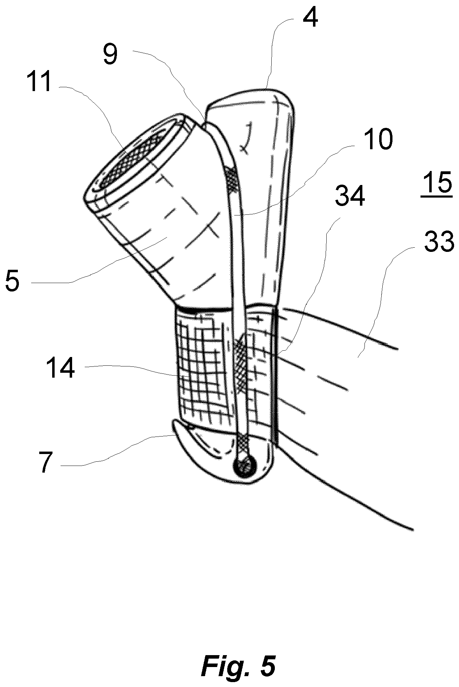

Fig. 5 discloses a perspective view of the PTT device 1 removably attached to a plate carrier 30 by a strap segment 14. In this figure the strap segment 14 is provided by a strap 33 with stitches 34 defining strap segments 14. The PTT device 1 is pushed downwards under the strap segment 14 until the projection 7 is located under the strap segment 14. In this position the PTT device 1 is firmly secured as the projection 7 prevents upwards movement and the button protrusion 5 prevents downwards movement of the PTT device 1. The loop shaped elastic cord 10 extends on the outer side of the strap segment 14 and is secured in the second recess 9. Thus, the elastic cord provides additional securement of the PTT device 1 in the secured position. As the PTT device 1 is firmly secured it will stay in place even under extreme conditions where the user crawls on the ground where the PTT device Can be exposed to external forces, such as rocks or bricks that is forced against the PTT device 1, as the wearer crawls forward. The push button 11 is recessed from the send end 4, so is less likely to be unintentionally activated.

The overall length I2 of the PTT device 1 is approximately 74 mm. In the area of the first recess 8, the width is approximately 23 mm, and the thickness is approximately 15 mm. The projection 7 protrudes about 4 mm from the bottom of the first recess 8. The distance from the outermost point of the free end 6 of the button protrusion 5 to the rear side 29 is about 36 mm. The cross-section of button protrusion 5 is circular and has a diameter of approximately 25 mm. The angle between the longitudinal axis of the button protrusion 5 and the longitudinal axis of the elongate body 23 is approximately 45 degrees.

The cross-section of the elongate body 2 is somewhat elliptic. Other embodiments of the control unit 1 can off course have other dimensions.

The control unit described here is secure by a part of the body or housing itself is pushed behind a strap segment. With the prior art control units, on arm of an alligator clip or a MOLLE clip is used to secure the control unit to the webbing.

The control unit can have several forms. It can comprise several PTT buttons, f. ex. up to six PTT buttons. It may also comprise buttons for channel selection and volume control. It may also comprise more cables extending from both ends of the unit and/or it may comprise COM ports, to which cables can be connected.

### ITEMS

1. A control unit (1) to be connected to a at least one other device (19, 20) of a communication system (27), which communication system (2) is adapted to be worn by a person, the control unit (1) is adapted to be removably secured in a secured position between a strap segment (14) and a loadbearing panel (15), which control unit (1) comprises:
   a user interface (11) for controlling the at least one other device (20, 21),
   an elongate main body (2), which extends in a first direction (x) between a first end (3) and a second end (4) and has a front side (28) facing the strap segment (14) in the secured position and a rear side (29) facing the load-bearing panel (15) in the secured position, and wherein the front side (28) has a first recess (8) to receive the strap segment (14) in the secured position of the control unit (1).
2. A control unit (1) according to item 1, wherein the first recess (8) has a first end (35) and a second end (36).
3. A control unit according to item 1 or 2 comprising a button protrusion (5) extending from the front side (28) to a free end (6).
4. A control unit (1) according to item 3, wherein the first recess (8) is arranged between the first end (3) of the elongate body (2) and the button protrusion (5).
5. A control unit (1) according to item 3 or 4, wherein the user interface comprises an activation button (11) is arranged at the free end (6).
6. A control unit (1) according to any of the preceding items, wherein a first projection (7) extends from the front side of the elongate body (2).
7. A control unit (1) according to item 2, 3 and 6, wherein the first projection (7) is arranged at first end (35) of first recess (8) and the button protrusion (5) is arranged at the second end (36) of the first recess (8).
8. A control button according to any of the preceding items, wherein the control unit (1) comprises a locking member (10), which is extending from the first end (3) and is adapted to be attached to the control unit (1) at the second end (4).
9. A control unit (1) according to item 8, wherein the locking member is a loop shaped elastic cord (10).
10. A control unit (1) according to item 9, wherein a second recess (9) is provided between the front side (28) of the elongate body (2) and the button protrusion (5) at the second end (4) of the elongate body 2).
11. A control unit (1) according to any of the preceding items, wherein the length of the first recess (8) in the first direction (x) is approximately 20-30 mm, 22-28 mm, or 24-26 mm.
12. A control unit (1) according to any of the preceding items, wherein a first cross section of the elongate member (2) orthogonal to the first direction (x) at the first recess (8) is rounded with a maximum width (w) of about 23 mm and a maximum thickness (T) of about 15 mm.
13. A control unit (1) according to any of the preceding items, wherein a first cable (12) and a second cable (13) extend from the second end (4) of the elongate body (2).
14. A control unit (1) according to any of the preceding items, which control unit is a push-to-talk device (1).

### LIST OF REFERENCES

- 1: control unit/PTT device
- 2: elongate body
- 3: first end
- 4: second end
- 5: button protrusion
- 6: free end of button protrusion
- 7: projection
- 8: first recess
- 9: second recess
- 10: elastic cord
- 11: PTT button
- 12: headset cable
- 13: communication unit cable
- 14: strap segment
- 15: front panel, load bearing panel
- 16: shoulder strap
- 17: rear panel
- 18: intermediate panel
- 19: communication headset
- 20: communication unit
- 21: antenna
- 22: microphone arm
- 23: through going hole
- 24: earphone
- 25: headband
- 26: headset connector
- 27: communication system
- 28: front side of elongate body
- 29: rear side of elongate body
- 30: plate carrier
- 31: cut-out
- 32: FREE
- 33: strap
- 34: stitch
- 35: first end of first recess
- 36: second end of first recess
- I1: length of first recess
- I2: overall length of control unit/PTT device
- x: first direction

## Claims

1. A control unit (1) to be connected to a at least one other device (19, 20) of a communication system (27), which communication system (2) is adapted to be worn by a person, the control unit (1) is adapted to be removably secured in a secured position between a strap segment (14) and a loadbearing panel (15), which control unit (1) comprises: a user interface (11) for controlling the at least one other device (20, 21), an elongate main body (2), which extends in a first direction (x) between a first end (3) and a second end (4) and has a front side (28) facing the strap segment (14) in the secured position and a rear side (29) facing the load-bearing panel (15) in the secured position, and wherein the front side (28) has a first recess (8) to receive the strap segment (14) in the secured position of the control unit (1).

2. A control unit (1) according to claim 1, wherein the first recess (8) has a first end (35) and a second end (36).

3. A control unit according to claim 1 or 2 comprising a button protrusion (5) extending from the front side (28) to a free end (6).

4. A control unit (1) according to claim 3, wherein the first recess (8) is arranged between the first end (3) of the elongate body (2) and the button protrusion (5).

5. A control unit (1) according to claim 3 or 4, wherein the user interface comprises an activation button (11) is arranged at the free end (6).

6. A control unit (1) according to any of the preceding claims, wherein a first projection (7) extends from the front side of the elongate body (2).

7. A control unit (1) according to claim 2, 3 and 6, wherein the first projection (7) is arranged at first end (35) of first recess (8) and the button protrusion (5) is arranged at the second end (36) of the first recess (8).

8. A control button according to any of the preceding claims, wherein the control unit (1) comprises a locking member (10), which is extending from the first end (3) and is adapted to be attached to the control unit (1) at the second end (4).

9. A control unit (1) according to claim 8, wherein the locking member is a loop shaped elastic cord (10).

10. A control unit (1) according to claim 9, wherein a second recess (9) is provided between the front side (28) of the elongate body (2) and the button protrusion (5) at the second end (4) of the elongate body 2).

11. A control unit (1) according to any of the preceding claims, wherein the length of the first recess (8) in the first direction (x) is approximately 20-30 mm, 22-28 mm, or 24-26 mm.

12. A control unit (1) according to any of the preceding claims, wherein a first cross section of the elongate member (2) orthogonal to the first direction (x) at the first recess (8) is rounded with a maximum width (w) of about 23 mm and a maximum thickness (T) of about 15 mm.

13. A control unit (1) according to any of the preceding claims, wherein a first cable (12) and a second cable (13) extend from the second end (4) of the elongate body (2).

14. A control unit (1) according to any of the preceding claims, which control unit is a push-to-talk device (1).
